# DEMANDE DE BREVET EUROPEEN

(11) **EP 4 851 862 A1**
(43) Date de publication de la demande: **09.12.2026**
(21) Numéro de dépôt: 26182355.3
(22) Date de dépôt: 01.06.2026
(51) Int. Cl.: G06N 3/0455, G06N 3/088, G06N 20/00, H04L 9/40

(54) **PROCÉDÉ ET DISPOSITIF DE CARACTÉRISATION D'UNE ANOMALIE DANS DES DONNÉES**

(30) Priorité: 03.06.2025 FR 2505936
(71) Demandeur: Orange, 92130 Issy-les-Moulineaux (FR)
(72) Inventeur: BERLEMON, Samuel, 92326 Chatillon Cedex (FR); CUMIN, Julien, 92326 Chatillon Cedex (FR)
(74) Mandataire: Cabinet Beau de Loménie

(57) **Abrégé**

La présente invention concerne un procédé et un dispositif (APP) de caractérisation d'une anomalie dans un échantillon de données d'entrée (**X**). En particulier, le procédé proposé comprend :
- si une anomalie est détectée à partir d'un score d'anomalie (S) déterminé par un modèle de détection (DET) à partir de l'échantillon d'entrée (**X**) :
∘ une fourniture d'un vecteur de caractérisation (**V**) de l'anomalie détectée (FLT) et déterminé sur la base d'une différence entre : l'échantillon d'entrée (**X**) ; et un échantillon de données reconstruit (**X**') par un modèle de reconstruction (REC) à partir de l'échantillon d'entrée (**X**).

## Description

### Domaine technique

La présente invention concerne le domaine général de l'analyse de données. Plus particulièrement, la présente invention concerne un procédé et un dispositif de caractérisation d'une anomalie dans des données. Elle concerne également un procédé d'entrainement, un programme d'ordinateur, et un support d'informations. La présente invention trouve une application particulièrement avantageuse, bien que nullement limitative, pour détecter et caractériser une panne de fonctionnement d'un équipement réseau ou d'un équipement utilisateur, ou une intrusion dans un réseau de communication. Elle peut toutefois s'appliquer à d'autres types de données structurées, comme par exemple à des données observées, collectées par des capteurs, calculées par un dispositif électronique ou un ordinateur, etc.

### Technique antérieure

La présente invention s'inscrit dans le contexte de la détection d'anomalies dans des données, notamment dans des données réseau afin de détecter une panne de fonctionnement d'un équipement réseau ou d'un équipement utilisateur, ou une intrusion dans un réseau de communication.

Les solutions existantes de détection d'anomalies reposent généralement sur l'obtention d'un score d'anomalie, c'est-à-dire un score caractérisant un degré de confiance selon lequel un échantillon de données est une anomalie ou non. Ce score d'anomalie est ensuite utilisé pour déterminer la présence d'une anomalie dans les données observées.

Cela étant, les solutions existantes de détection d'anomalies ne sont pas pleinement satisfaisantes en ce qu'elles ne permettent pas de caractériser précisément l'anomalie détectée. Dit autrement, les solutions existantes ne permettent pas de déterminer la nature de l'anomalie détectée et/ou son origine, et nécessitent donc des interventions supplémentaires pour caractériser l'anomalie et y remédier.

En particulier, le document WO 2020/078059 A1 décrit une solution dans laquelle un unique modèle d'apprentissage automatique est utilisé pour détecter et caractériser une anomalie. Une anomalie détectée est caractérisée en déterminant l'écart de l'échantillon anormal à la distribution de données. Ceci implique de comparer chacune des composantes de l'échantillon anormal (i.e. dimension par dimension) à la distribution de données pour déterminer quelles composantes de l'échantillon anormal s'écartent le plus de la distribution de données.

Cependant, la solution proposée dans le document WO 2020/078059 A1 ne permet pas de caractériser précisément l'anomalie détectée. L'échantillon anormal est comparé à la distribution de données (représentative d'un comportement moyen) sans tenir compte du contexte particulier dans lequel l'anomalie est détectée. Il en résulte notamment que cette solution ne permet pas de caractériser une anomalie contextuelle (i.e. un échantillon a déjà été observé et correspond à la distribution de données, mais se distingue dans un contexte particulier).

Il existe par conséquent un besoin pour une solution permettant de caractériser précisément une anomalie détectée dans des données.

### Exposé de l'invention

La présente invention a pour objectif de remédier à tout ou partie des inconvénients de l'art antérieur, notamment ceux exposés précédemment.

À cet effet, selon un aspect de l'invention, il est proposé un procédé (mis en œuvre par ordinateur) de caractérisation d'une anomalie dans un échantillon de données d'entrée, le procédé comprenant :
- si une anomalie est détectée à partir d'un score d'anomalie déterminé par un modèle de détection à partir de l'échantillon d'entrée :
   ∘ une fourniture d'un vecteur de caractérisation de l'anomalie détectée déterminé sur la base d'une différence entre : l'échantillon de données d'entrée ; et un échantillon de données reconstruit par un modèle de reconstruction à partir de l'échantillon de données d'entrée.

Dans le contexte de l'invention, nous utilisons le terme « *anomalie* » pour désigner un échantillon de données considéré comme anormal par rapport à des données de référence. Il peut s'agir notamment d'une anomalie ponctuelle (un échantillon se distingue des données observées), contextuelle (un échantillon a déjà été observé, mais se distingue dans un contexte particulier), ou collective (plusieurs échantillons décrivent un motif anormal).

Par le terme « *modèle de détection* », nous entendons typiquement un modèle d'apprentissage automatique qui est entraîné à partir de données d'entraînement à détecter une anomalie ; et par le terme « modèle de reconstruction », nous entendons par exemple un modèle d'apprentissage automatique qui est entraîné à partir de données d'entraînement à reconstruire de manière fidèle des données correspondant à un comportement attendu (« théorique ») c'est-à-dire normal (typiquement en préservant leur forme ainsi que certaines de leurs propriétés statistiques et structurelles).

D'autres modèles de détection et de reconstruction que des modèles basés sur un apprentissage automatique peuvent également être considérés dans le cadre de l'invention.

La présente invention propose d'utiliser conjointement un modèle d'apprentissage automatique dédié à la détection d'anomalies et un modèle d'apprentissage automatique dédié à la reconstruction de données.

D'une part, un modèle d'apprentissage automatique dédié à la détection est utilisé afin d'obtenir un score d'anomalie pour l'échantillon de données d'entrée. Ceci permet de détecter fiablement une anomalie dans l'échantillon d'entrée.

D'autre part, un modèle d'apprentissage automatique dédié à la reconstruction (distinct du modèle de détection) est utilisé pour obtenir un échantillon de données reconstruit à partir de l'échantillon d'entrée qui reconstruit un échantillon de données normales, et ainsi en déduire un vecteur de caractérisation de l'anomalie détectée. Ce vecteur peut également être qualifié de « *vecteur d'erreur de reconstruction* », l'erreur de reconstruction étant définie par la différence entre l'échantillon de données d'entrée et l'échantillon de données reconstruit. Ce vecteur est représentatif de l'écart à la normale de l'échantillon d'entrée considéré comme anormal (selon plusieurs composantes), et en ce sens caractérise l'anomalie détectée. Ce vecteur de caractérisation de l'anomalie détectée peut ensuite être utilisé pour déterminer la nature de l'anomalie détectée et/ou son origine.

La présente invention permet ainsi de caractériser plus précisément une anomalie détectée. La présente invention propose de comparer l'échantillon d'entrée à un échantillon reconstruit (représentatif d'un comportement attendu dans ce contexte particulier), et non à la distribution de données (représentative d'un comportement moyen). La présente invention permet ainsi de tenir compte du contexte particulier dans lequel l'anomalie est détectée. Ceci permet notamment de caractériser précisément une anomalie contextuelle. Il convient de noter que l'invention s'applique également à d'autres types d'anomalies que des anomalies contextuelles.

En outre, en comparaison à la solution proposée dans l'état de la technique utilisant un unique modèle pour détecter et caractériser une anomalie, l'utilisation conjointe d'un modèle de détection et d'un modèle de reconstruction est particulièrement avantageuse. Cette utilisation conjointe de deux modèles dédiés permet de dissocier l'objectif de détection d'une anomalie et l'objectif de caractérisation de l'anomalie. Le modèle de détection est entraîné pour détecter fiablement une anomalie, tandis que le modèle de reconstruction est entraîné pour reconstruire fidèlement des données normales afin de caractériser une anomalie détectée.

Ainsi, la présente invention fournit une solution permettant non seulement de détecter fiablement une anomalie dans des données, mais également de caractériser précisément cette anomalie.

Selon un mode de réalisation, l'échantillon de données d'entrée comprend des données extraites de paquets réseau, et l'anomalie détectée correspond à une panne de fonctionnement ou un dysfonctionnement d'un équipement réseau ou d'un équipement utilisateur, ou à une intrusion dans un réseau de communication.

Dans ce mode réalisation, la solution proposée est appliquée à la détection d'une anomalie réseau, à savoir une panne ou un dysfonctionnement d'un équipement réseau ou d'un équipement utilisateur, ou une intrusion dans un réseau de communication. Contrairement aux solutions existantes, la solution proposée permet non seulement de détecter fiablement une telle anomalie réseau, mais également de caractériser celle-ci. Grâce au vecteur de caractérisation de l'anomalie détectée, la solution proposée ne nécessite pas d'interventions supplémentaires pour déterminer la nature et/ou l'origine de l'anomalie détectée et y remédier.

Plus précisément, le vecteur de caractérisation est représentatif de l'écart à la normale de l'échantillon de données d'entrée. Il permet de déterminer quelles composantes de l'échantillon d'entrée divergent de manière significative des composantes de l'échantillon reconstruit (représentatif du comportement normal attendu). Il permet ainsi de déterminer sur quelles caractéristiques de l'échantillon de données d'entrée porte l'anomalie détectée. Ceci permet ainsi de déterminer la nature et/ou l'origine de l'anomalie détectée et d'y remédier.

Il convient également de noter que la solution proposée s'applique tant aux types d'anomalies réseau connus qu'aux types d'anomalies réseau qui ne sont pas encore connus. Pour les dysfonctionnements, pannes ou intrusions de types connus (c'est-à-dire des anomalies réseau dont les caractéristiques propres sont connues), la solution proposée permet de détecter et de caractériser ces anomalies, et en particulier le vecteur de caractérisation permet d'identifier les caractéristiques propres à ces types d'anomalies. Et, pour les dysfonctionnements, pannes ou intrusions de types inconnus (c'est-à-dire des anomalies réseau dont les caractéristiques propres ne sont pas encore connues), la solution proposée permet également de détecter et de caractériser ces anomalies, le vecteur de caractérisation permettant d'analyser ces anomalies et de déterminer les caractéristiques propres à celles-ci. La solution proposée permet ainsi de détecter et de caractériser tout type d'anomalie réseau.

Selon un mode de réalisation, le procédé proposé comprend un envoi d'un message (e.g. un message d'alerte ou d'anomalie) comprenant le vecteur de caractérisation de l'anomalie détectée à destination d'un serveur (e.g. un serveur d'assistance ou de gestion). Le message peut également comprendre le score d'anomalie.

Ce mode de réalisation permet non seulement d'informer un serveur d'assistance qu'une anomalie a été détectée, mais également de fournir à ce serveur des informations caractérisant l'anomalie détectée (le vecteur de caractérisation) et permettant de déterminer la nature et/ou l'origine de l'anomalie détectée pour y remédier.

Comme mentionné ci-dessus, la solution proposée permet une caractérisation plus précise de l'anomalie détectée que les solutions proposées dans l'état de la technique. Il en résulte que ce mode de réalisation permet au serveur de déterminer la nature et/ou l'origine de l'anomalie détectée de manière plus fiable et de remédier à cette anomalie de manière plus efficace.

Selon un mode de réalisation, le procédé proposé comprend une classification de l'anomalie détectée en fonction du vecteur de caractérisation de l'anomalie détectée.

Dans ce mode de réalisation, le vecteur de caractérisation de l'anomalie détectée est utilisé pour attribuer une classe à l'anomalie. Ce mode de réalisation permet ainsi de déterminer la nature de l'anomalie détectée et/ou son origine, sans pour autant qu'il soit nécessaire de réaliser d'interventions supplémentaires.

Étant donné que la solution proposée permet une caractérisation plus précise de l'anomalie détectée que les solutions de l'état de la technique, ce mode de réalisation permet de classifier l'anomalie détectée manière plus fiable (c'est-à-dire en réalisant moins d'erreurs de classification).

Dans un contexte de détection d'une panne de fonctionnement ou d'un dysfonctionnement d'un équipement réseau ou d'un équipement utilisateur, les classes attribuables à l'anomalie détectée peuvent correspondre à des types de pannes ou des types de dysfonctionnements de l'équipement, tels qu'une perte de connexion, une panne matérielle, une configuration erronée, une panne d'un service mis en œuvre par l'équipement.

Et, dans un contexte de détection d'une intrusion dans un réseau de communication, les classes attribuables à l'anomalie détectée peuvent correspondre à des types de cyberattaques, notamment une attaque par déni de service, une attaque de l'homme du milieu (« *man-in-the-middle attack* » en anglais), une injection SQL, une écoute réseau clandestine (« *sniffing* » en anglais).

Selon un mode de réalisation, le procédé proposé comprend une détermination d'une action à réaliser en fonction du vecteur de caractérisation de l'anomalie détectée.

Ce mode de réalisation permet de remédier à l'anomalie détectée. En effet, le vecteur de caractérisation de l'anomalie détectée est utilisé pour déterminer une action à réaliser, c'est-à-dire une intervention à réaliser pour remédier à l'anomalie.

En comparaison aux solutions de l'état de la technique, la solution proposée permet de caractériser de manière plus précise l'anomalie détectée (sans nécessiter d'interventions supplémentaires pour caractériser précisément l'anomalie). Il s'ensuit que ce mode de réalisation permet de déterminer de manière plus fiable l'action à réaliser pour remédier à l'anomalie détectée. Autrement dit, ce mode de réalisation permet de déterminer les interventions permettant effectivement de remédier à l'anomalie détectée.

Par exemple, dans un contexte de détection d'une panne de fonctionnement d'un équipement, l'action à réaliser peut correspondre à une redirection du trafic réseau vers un autre équipement, ou à un redémarrage de l'équipement défaillant. Et, dans un contexte de détection d'une intrusion dans un réseau de communication, il peut s'agir de mettre en œuvre des mesures de filtrage ou de blocage du trafic réseau.

Selon un mode de réalisation, le modèle de détection comprend un réseau de neurones de type auto-encodeur, et/ou le modèle de reconstruction comprend un autre réseau de neurones de type auto-encodeur.

D'une part, l'utilisation d'un auto-encodeur pour mettre en œuvre le modèle de détection permet de détecter fiablement une anomalie dans des données. L'auto-encodeur est entrainé (notamment de manière non-supervisée) à partir de données d'entrainement à détecter fiablement une anomalie.

D'autre part, l'utilisation d'un auto-encodeur pour mettre en œuvre le modèle de reconstruction est particulièrement avantageuse. Ce modèle d'apprentissage automatique permet d'apprendre (notamment de manière non-supervisée) à reconstruire fidèlement des données normales à partir de données d'entrainement.

Bien évidemment, la présente invention n'est pas limitée à l'utilisation d'auto-encodeurs pour mettre en œuvre les modèles de détection et de reconstruction. Il pourrait également être envisagé des modes de réalisation dans lesquels d'autres modèles d'apprentissage automatique sont utilisés.

En ce qui concerne le modèle de détection, la solution proposée peut utiliser tout type de modèles permettant de fournir des scores d'anomalies (notamment compris entre 0 et 1).

Et, en ce qui concerne le modèle de reconstruction, la solution proposée peut utiliser des auto-encodeurs de différents types d'architecture (e.g., réseaux de neurones convolutifs, transformers) permettant de reconstruire des données normales. La solution proposée peut également utiliser d'autres types de modèles d'apprentissage automatique permettant de reconstruire des données normales, par exemple un modèle utilisant une analyse en composantes principales.

Selon un mode de réalisation, le vecteur de caractérisation de l'anomalie détectée est déterminé sur la base d'une différence composante-par-composante entre : l'échantillon de données d'entrée ; et l'échantillon de données reconstruit.

Ce mode de réalisation permet de déterminer le vecteur de caractérisation de l'anomalie détectée, tout en assurant une complexité d'implémentation réduite.

La présente invention n'est pour autant pas limitée à l'utilisation d'une différence composante-par-composante entre l'échantillon d'entrée et l'échantillon reconstruit. D'autres modes de réalisation peuvent également être envisagés ; des exemples sont fournis ultérieurement.

Selon un autre aspect de l'invention, il est proposé un procédé (mis en œuvre par ordinateur) d'entrainement d'un modèle de reconstruction de données (pour caractériser une anomalie), comportant une ou plusieurs itérations comprenant :
- une détermination d'une erreur de reconstruction à partir d'une différence entre un échantillon de données d'entrainement et un échantillon de données reconstruit par le modèle de reconstruction,
- une évaluation d'une fonction de coût à partir de l'erreur de reconstruction et d'un score d'anomalie déterminé par un modèle de détection d'anomalies à partir de l'échantillon de données d'entrainement, et
- une mise à jour du modèle de reconstruction pour minimiser la fonction de coût.

Par « *mise à jour du modèle* », nous entendons une mise à jour des paramètres du modèle d'apprentissage automatique en question. Dans le contexte d'un réseau de neurones, il peut s'agir en particulier d'une mise à jour des poids du réseau de neurones (en utilisant la rétropropagation). Mais il peut également s'agir de la mise à jour d'autres paramètres, tels que le nombre de neurones ou le nombre de couches, en vue de minimiser la fonction de coût.

La présente invention propose d'utiliser un modèle dédié à la détection d'anomalies pour entrainer un autre modèle dédié à la reconstruction de données normales.

Plus précisément, le modèle de reconstruction est entrainé en utilisant une fonction de coût qui est évaluée sur la base non seulement des erreurs de reconstruction du modèle de reconstruction, mais également des scores d'anomalie fournis par le modèle de détection. La fonction de coût prend en compte les erreurs de reconstruction, c'est-à-dire les différences entre les échantillons d'entrainement et les échantillons reconstruits par le modèle de reconstruction. Elle prend également en compte les scores d'anomalie fournis par le modèle de détection pour ces échantillons d'entrainement, chaque score caractérisant un degré de confiance selon lequel un échantillon d'entrainement comprend une anomalie ou non.

Le procédé d'entrainement proposé permet d'obtenir un modèle de reconstruction qui (une fois entrainé) est capable de reconstruire fidèlement des données normales.

Le modèle de reconstruction ainsi obtenu permet également de caractériser précisément une anomalie détectée. Lorsqu'une anomalie est détectée, la différence entre les données d'entrée et les données reconstruites par le modèle de reconstruction caractérise l'écart à la normale de l'anomalie détectée.

Il convient de noter que les modes de réalisation décrits ci-dessus en lien avec le procédé de détection et de caractérisation d'une anomalie s'appliquent également au procédé d'entrainement proposé, notamment en ce qui concerne le type des données d'entrée, le type d'anomalie détectée, l'architecture des modèles de détection et de reconstruction, et le calcul du vecteur de caractérisation de l'anomalie détectée.

Selon un mode de réalisation, l'échantillon de données d'entraînement appartient à un ensemble de données d'entrainement comprenant des échantillons de données normaux et des échantillons de données anormaux (i.e. l'ensemble de données d'entrainement ne comprend pas uniquement des échantillons normaux), et l'ensemble de données d'entrainement ne comprenant pas d'étiquettes identifiant une ou plusieurs anomalies dans l'ensemble de données d'entraînement.

Ce mode de réalisation propose d'entraîner le modèle de reconstruction de manière non supervisée en utilisant des échantillons de données normaux et anormaux. Bien que les échantillons d'entrainement puissent être normaux ou anormaux, ils ne sont pas étiquetés. Ils ne comprennent pas de labels identifiant les échantillons d'entrainement comme normaux ou anormaux. En fait, les scores d'anomalie fournis par le modèle de détection sont utilisés pour apprendre le caractère normal ou non des échantillons d'entrainement.

Ce mode de réalisation permet d'entraîner le modèle de reconstruction à reconstruire fidèlement des données normales, sans pour autant qu'il soit nécessaire d'annoter les données d'entrainement (aucune intervention humaine n'est nécessaire pour étiqueter les données) ou qu'il soit nécessaire d'utiliser uniquement des données d'entrainement normales.

Selon un mode de réalisation, la fonction de coût est évaluée à partir d'un produit entre l'erreur de reconstruction et le score d'anomalie.

Dans ce mode de réalisation, la fonction de coût est évaluée en pondérant les erreurs de reconstruction du modèle de reconstruction par les scores d'anomalie fournis par le modèle de détection. De cette manière, la fonction de coût prend davantage en compte les erreurs de reconstruction associées aux données considérées comme normales. Cela permet d'obtenir un modèle de reconstruction (une fois entrainé) capable de reconstruire fidèlement des données normales (et non des données anormales).

Selon un mode de réalisation, le procédé d'entrainement proposé comprend, préalablement à l'entrainement du modèle de reconstruction, un entrainement du modèle de détection à partir d'échantillons de données d'entrainement.

Ce mode de réalisation permet d'obtenir un modèle dédié à la détection d'anomalies, et puis d'exploiter celui-ci pour entrainer le modèle dédié à la reconstruction de données.

Notons que l'entrainement du modèle de détection est, selon un mode de réalisation, réalisée de manière non supervisée. L'ensemble de données d'entrainement utilisé pour l'entrainement du modèle de détection peut être identique à celui utilisé pour l'entrainement du modèle de reconstruction, ou peut être différent (dans la mesure où les deux ensembles de données d'entrainement présentent des distributions similaires).

Selon un aspect de l'invention, il est proposé un procédé (mis en œuvre par ordinateur) comprenant : un procédé d'entrainement conforme à l'invention, et un procédé de détection et de caractérisation d'une anomalie conforme à l'invention.

Les différentes étapes du procédé proposé peuvent être mises en œuvre notamment soit localement dans un équipement réseau, soit dans un serveur distant (i.e. dans le « *cloud* » en anglais), soit dans une configuration hybride. Par exemple, les étapes du procédé d'entraînement peuvent être mises en œuvre par un serveur distant (par exemple dans le cloud) ; puis, une fois les modèles entraînés, les étapes du procédé de détection et de caractérisation d'une anomalie peuvent être mises en œuvre localement par un équipement réseau (e.g. une passerelle réseau).

Selon un aspect de l'invention, il est proposé un dispositif de caractérisation d'une anomalie dans un échantillon de données d'entrée, le dispositif comprenant :
- un module de détection configuré pour détecter une anomalie à partir d'un score d'anomalie déterminé par un modèle de détection à partir de l'échantillon d'entrée, et
- un module de caractérisation configuré pour, si une anomalie est détectée, fournir un vecteur de caractérisation de l'anomalie détectée déterminé sur la base d'une différence entre : l'échantillon de données d'entrée ; et un échantillon de données reconstruit par un modèle de reconstruction à partir de l'échantillon de données d'entrée.

Le dispositif proposé de caractérisation d'une anomalie peut être configuré pour mettre en œuvre tout ou partie des étapes d'un procédé de caractérisation d'une anomalie conforme à l'invention. Pour chaque étape (ou opération) d'un procédé conforme à l'invention, le dispositif proposé peut comprendre un module correspondant configuré pour réaliser cette étape.

Le terme « *module* » peut correspondre aussi bien à un composant logiciel qu'à un composant matériel ou à un ensemble de composants matériels et logiciels. Un composant logiciel correspond à tout élément d'un programme apte à mettre en œuvre une fonction ou un ensemble de fonctions pour le module concerné. De la même manière, un composant matériel correspond à tout élément d'un ensemble matériel (ou hardware) apte à mettre en œuvre une fonction ou un ensemble de fonctions pour le module concerné (circuit intégré, carte à puce, carte à mémoire, etc.).

Selon un aspect de l'invention, il est proposé un dispositif d'entrainement d'un modèle de reconstruction de données comprenant :
- un module de détermination configuré pour déterminer une erreur de reconstruction à partir d'une différence entre un échantillon de données d'entrainement et un échantillon de données reconstruit par le modèle de reconstruction,
- un module d'évaluation configuré pour évaluer une fonction de coût à partir de l'erreur de reconstruction et d'un score d'anomalie déterminé par un modèle de détection d'anomalies à partir de l'échantillon de données d'entrainement, et
- un module de mise à jour configuré pour mettre à jour le modèle de reconstruction pour minimiser la fonction de coût.

Le dispositif d'entrainement proposé peut être configuré pour mettre en œuvre tout ou partie des étapes d'un procédé d'entrainement conforme à l'invention. Pour chaque étape (ou opération) d'un procédé conforme à l'invention, le dispositif proposé peut comprendre un module correspondant configuré pour réaliser cette étape.

Selon un autre aspect de l'invention, il est proposé un système comprenant un dispositif d'entrainement conforme à l'invention et un dispositif de caractérisation d'une anomalie conforme à l'invention.

Selon un aspect de l'invention, il est proposé un programme d'ordinateur comprenant des instructions pour mettre en œuvre les étapes d'un procédé conforme à l'invention (un procédé d'entrainement et/ou un procédé de détection et de caractérisation d'une anomalie), lorsque le programme d'ordinateur est exécuté par au moins un processeur ou un ordinateur.

Le programme d'ordinateur peut être formé d'une ou plusieurs sous-parties stockées dans une même mémoire ou dans des mémoires distinctes. Le programme peut utiliser n'importe quel langage de programmation, et être sous la forme de code source, de code objet, ou de code intermédiaire entre code source et code objet, tel que dans une forme partiellement compilée, ou dans n'importe quelle autre forme souhaitable.

Selon un aspect de l'invention, il est proposé un support d'informations lisible par ordinateur comprenant un programme d'ordinateur conforme à l'invention.

Le support d'informations peut être n'importe quelle entité ou dispositif capable de stocker le programme. Par exemple, le support peut comporter un moyen de stockage, tel qu'une mémoire non-volatile ou ROM, par exemple un CD-ROM ou une ROM de circuit microélectronique, ou encore un moyen d'enregistrement magnétique, par exemple un disque dur. D'autre part, le support de stockage peut être un support transmissible tel qu'un signal électrique ou optique, qui peut être acheminé via un câble électrique ou optique, par radio ou par un réseau de télécommunication ou par un réseau informatique ou par d'autres moyens. Le programme selon l'invention peut être en particulier téléchargé sur un réseau informatique. Alternativement, le support d'informations peut être un circuit intégré dans lequel le programme est incorporé, le circuit étant adapté pour exécuter ou pour être utilisé dans l'exécution du procédé en question.

Le dispositif, le programme d'ordinateur et le support d'informations proposés disposent des avantages décrits ci-dessus en lien avec les procédés proposés.

### Brève description des dessins

D'autres caractéristiques et avantages de la présente invention ressortiront de la description fournie ci-après, illustrant des modes de réalisation de l'invention donnés à titre d'exemple, en référence aux dessins ci-joints :
la figure 1 représente un système comprenant des dispositifs communiquant dans des réseaux de communication selon un mode de réalisation de l'invention,
la figure 2 représente un procédé de détection d'une panne de fonctionnement d'un équipement utilisateur selon un mode de réalisation de l'invention,
la figure 3 représente une architecture fonctionnelle d'un dispositif de détection et de caractérisation d'anomalies selon un mode de réalisation de l'invention,
la figure 4 représente un procédé de détection et de caractérisation d'une anomalie selon un mode de réalisation de l'invention,
la figure 5 représente un procédé d'entrainement d'un modèle de détection et d'entrainement d'un modèle de reconstruction selon un mode de réalisation de l'invention, et
la figure 6 représente une architecture matérielle d'un dispositif de détection et de caractérisation d'anomalies selon un mode de réalisation de l'invention.

### Description de modes de réalisation

Les modes de réalisation de la présente invention permettent tant de détecter fiablement une anomalie dans des données, que de caractériser précisément cette anomalie. On considère ici à titre illustratif l'application de la présente invention à la détection et la caractérisation d'une panne de fonctionnement d'un équipement utilisateur.

La description suivante de l'invention se référera à ce contexte particulier d'application, qui n'est donnée qu'à titre d'exemple illustratif et ne doit pas limiter l'invention. Celle-ci s'applique également à la détection et la caractérisation d'une intrusion dans un réseau de communication ou d'une panne d'un service réseau, voire encore à d'autres contextes, tels que la détection et la caractérisation d'une panne de fonctionnement d'un système de mesure (e.g. un capteur météo) ou d'autres systèmes techniques.

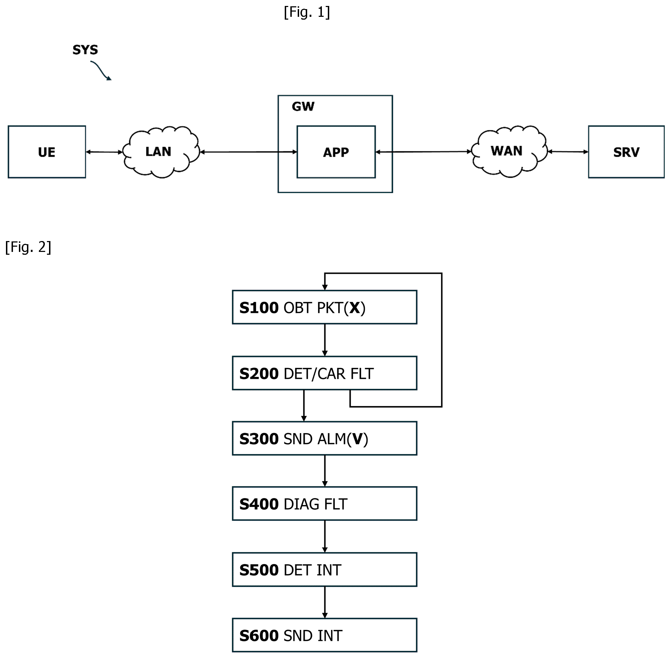

**La** **figure 1** représente un système comprenant des dispositifs communiquant dans des réseaux de communication selon un mode de réalisation de l'invention.

Nous décrivons ci-après cette figure pour introduire la présente invention et exemplifier un contexte particulier d'application de celle-ci, à savoir la détection d'une panne de fonctionnement d'un équipement utilisateur.

Tel qu'illustré par la figure 1, nous considérons un système SYS comprenant un équipement utilisateur UE, une passerelle GW, et un serveur d'assistance SRV.

L'équipement utilisateur UE est connecté à un réseau de communication local LAN et peut accéder à un réseau de communication étendu WAN par l'intermédiaire de la passerelle GW. Il peut par exemple s'agir d'un terminal de communication, tel qu'un ordinateur, un téléphone mobile, une tablette (aucune limitation n'est attachée à l'équipement utilisateur UE, et la solution proposée s'applique à tout type équipement).

La passerelle GW réalise l'interface entre le réseau de communication local LAN et le réseau de communication étendu WAN. Elle comprend en particulier un dispositif APP de détection et de caractérisation d'anomalies. Dans cet exemple d'application, le dispositif APP est configuré pour détecter et caractériser une panne de fonctionnement de l'équipement utilisateur UE. Lorsque le dispositif APP détecte une panne de fonctionnement de l'équipement utilisateur UE, il en informe le serveur d'assistance SRV en vue de remédier à cette panne.

Nous détaillons en référence à la figure suivante comment une panne de l'équipement utilisateur UE est détectée et comment celle-ci est traitée par le serveur d'assistance SRV.

**La** **figure 2** représente un procédé de détection d'une panne de fonctionnement d'un équipement utilisateur selon un mode de réalisation de l'invention.

Tel qu'illustré par la figure 2, selon un mode de réalisation, le procédé proposé pour détecter une panne de fonctionnement FLT d'un équipement utilisateur UE comprend (tout ou partie) des étapes S100 à S600 décrites ci-après.

À l'étape S100, la passerelle GW obtient (collecte) des paquets réseau PKT transitant sur le réseau local LAN, et en extrait des données réseau. Ces paquets réseau PKT sont envoyés par l'équipement utilisateur UE, ou sont à destination de celui-ci.

Les données réseau extraites des paquets réseau PKT comprennent par exemple des métadonnées extraites du trafic réseau, telles qu'un instant d'émission d'un paquet, une adresse IP source ou de destination, une version de protocole utilisé.

Ces données réseau sont fournies au dispositif APP pour détecter une anomalie, c'est-à-dire, dans cet exemple d'application, pour détecter une éventuelle panne de fonctionnement de l'équipement utilisateur UE.

Les données réseau constitue un échantillon de données, qui est dénommé ci-après « *échantillon d'entrée* » et est noté **X.** Chaque échantillon d'entrée **X** comprend une pluralité de caractéristiques respectivement représentées par une pluralité de composantes, chaque caractéristique étant associée à une des données extraites du trafic réseau.

Cette analyse de l'échantillon d'entrée **X** pour détecter une anomalie peut être déclenchée de manière automatique dès que cet échantillon est obtenu. Cette analyse peut également en variante être déclenchée à une fréquence donnée, ou sur demande.

À l'étape S200, le dispositif APP détermine si une anomalie FLT est présente ou non dans l'échantillon d'entrée **X.** Autrement dit, il détermine si l'échantillon **X** correspond à un mode de fonctionnement normal ou non de l'équipement utilisateur UE.

Si aucune anomalie n'est détectée dans l'échantillon d'entrée **X,** le procédé réitère les étapes S100 et S200.

Mais si une anomalie FLT est détectée dans l'échantillon d'entrée **X,** le dispositif APP caractérise l'anomalie détectée FLT en obtenant un vecteur de caractérisation **V**, et le procédé se poursuit à l'étape S300.

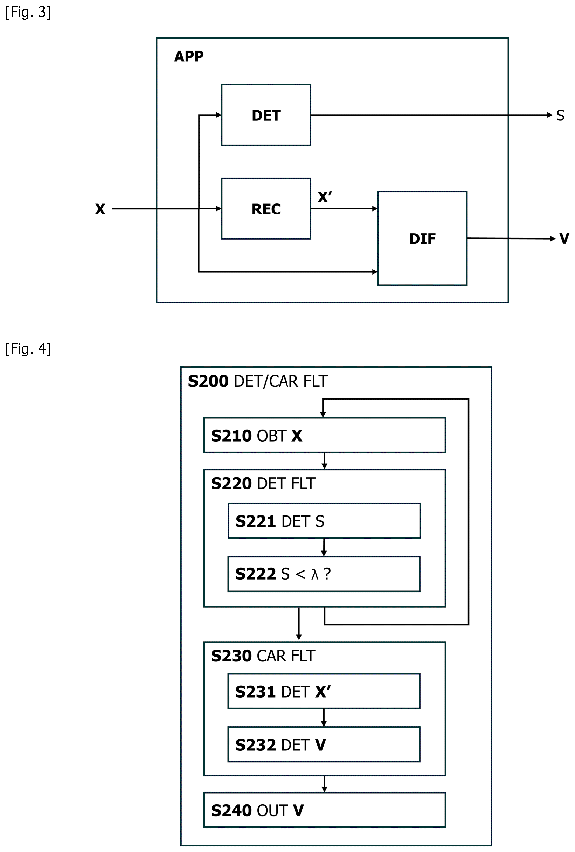

Le vecteur de caractérisation **V** décrit l'écart à la normale de l'anomalie détectée FLT. En ce sens, il caractérise l'anomalie détectée. Nous détaillons ci-après comment le vecteur de caractérisation **V** de l'anomalie détectée FLT est déterminé par le dispositif APP (figures 3 et 4).

À l'étape S300, le dispositif APP envoie d'un message d'alerte ALM comprenant le vecteur de caractérisation **V** à destination du serveur d'assistance SRV. Le message ALM peut également comprend un score d'anomalie déterminé par le dispositif APP.

Ceci permet non seulement d'informer le serveur d'assistance SRV qu'une anomalie a été détectée, mais également de fournir à ce serveur SRV des informations caractérisant l'anomalie FLT et permettant de déterminer la nature et/ou l'origine de l'anomalie pour y remédier.

À l'étape S400, le serveur d'assistance SRV attribue une classe à l'anomalie détectée FLT en fonction du vecteur de caractérisation **V** reçu.

Dans cet exemple d'application, les classes attribuables à l'anomalie détectée FLT peuvent correspondre à différents types de pannes de l'équipement utilisateur UE, tels qu'une perte de connexion, une panne matérielle, ou une configuration erronée.

À l'étape S500, le serveur d'assistance SRV détermine une action à réaliser INT en fonction du vecteur de caractérisation **V** et/ou en fonction de la classe attribuée à l'anomalie FLT.

C'est-à-dire que le serveur d'assistance SRV détermine une intervention à réaliser pour remédier à l'anomalie détectée FLT. Il peut par exemple s'agir d'un redémarrage de l'équipement utilisateur UE défaillant, ou d'une mise à jour de l'équipement utilisateur UE.

Les étapes S400 et/ou S500 peuvent, par exemple, être mises en œuvre par un modèle d'apprentissage automatique comprenant un réseau de neurones, qui est entraîné pour classer une anomalie FLT et/ou déterminer une intervention à réaliser sur la base d'un vecteur de caractérisation **V.** D'autres modèles d'apprentissage automatique ou techniques peuvent être utilisés pour mettre en œuvre ces étapes.

Notons que les étapes S400 et S500 pourrait, dans un autre mode de réalisation, être mises en œuvre directement par le dispositif APP (plutôt que par un serveur d'assistance SRV).

À l'étape S600, le serveur d'assistance SRV envoie l'action à réaliser INT à destination de la passerelle GW ou de l'équipement utilisateur UE pour remédier à l'anomalie détectée.

Contrairement aux solutions existantes, la solution proposée permet non seulement de détecter une anomalie réseau, mais également de caractériser celle-ci. Grâce au vecteur de caractérisation de l'anomalie détectée, la solution proposée ne nécessite pas d'interventions supplémentaires pour déterminer la nature et/ou l'origine de l'anomalie détectée et y remédier.

Ceci est permis par le dispositif APP qui détecte et caractérise une anomalie FLT. Nous présentons maintenant l'architecture fonctionnelle de ce dispositif (figure 3) et son fonctionnement (figure 4).

**La** **figure 3** représente une architecture fonctionnelle d'un dispositif de détection et de caractérisation d'anomalies selon un mode de réalisation de l'invention.

Tel qu'illustré par la figure 3, le dispositif APP comprend un modèle de détection DET, un modèle de reconstruction REC, et un module de différence DIF. Le fonctionnement de ces éléments est décrit ci-dessous en référence aux étapes de la figure suivante.

**La** **figure 4** représente un procédé de détection et de caractérisation d'une anomalie selon un mode de réalisation de l'invention.

Cette figure présente le fonctionnement du dispositif APP et détaille la mise en œuvre de l'étape S200 de détection et de caractérisation d'une anomalie FLT.

Tel qu'illustré par la figure 4, selon un mode de réalisation, le procédé proposé de détection et de caractérisation d'une d'anomalie FLT comprend (tout ou partie) des étapes S210 à S240 décrites ci-après et mises en œuvre par le dispositif APP.

À l'étape S210, le dispositif APP obtient l'échantillon de données d'entrée **X.**

Comme mentionné ci-dessus, selon un mode de réalisation, l'échantillon d'entrée **X** comprend des données réseau extraites de paquets PKT transitant sur un réseau de communication. Le dispositif APP peut par exemple obtenir cet échantillon d'entrée **X** soit en le recevant d'un module d'extraction de la passerelle GW, soit en le lisant dans une mémoire de la passerelle GW.

À l'étape S220, le dispositif APP détermine si une anomalie FLT est présente ou non dans l'échantillon d'entrée **X.** Pour ce faire, il met en œuvre les étapes S221 et S222.

L'analyse de l'échantillon de données **X** pour détecter une anomalie peut être déclenchée de manière automatique dès que cet échantillon est obtenu, ou à une fréquence donnée, ou sur demande.

À l'étape S221, le modèle de détection DET détermine un score d'anomalie S à partir de l'échantillon d'entrée **X.**

Le score d'anomalie S caractérise un degré de confiance selon lequel l'échantillon de données comprend une anomalie ou non. Nous adoptons ci-après la convention suivante : pour un échantillon de données **X** anormal, le score d'anomalie S est égal à 0 ; et pour un échantillon de données **X** normal, le score d'anomalie S est égal à 1. Bien entendu, d'autres conventions peuvent être envisagées en variante.

Selon un mode de réalisation, le modèle de détection DET comprend un réseau de neurones de type auto-encodeur. Pour obtenir le score d'anomalie S, le modèle de détection DET procède comme suit. Il détermine un échantillon de données reconstruit **X'** à partir d'un échantillon de données d'entrée **X,** puis il calcule le score d'anomalie S en comparant l'échantillon reconstruit **X'** à l'échantillon d'entrée **X.** Un exemple de mise en œuvre d'un tel modèle de détection est présenté dans la demande de brevet FR3116979A1.

La présente invention n'est pas limitée à ce mode de réalisation pour la mise en œuvre du modèle de détection DET, tout modèle de détection fournissant des scores d'anomalies pouvant être utilisé.

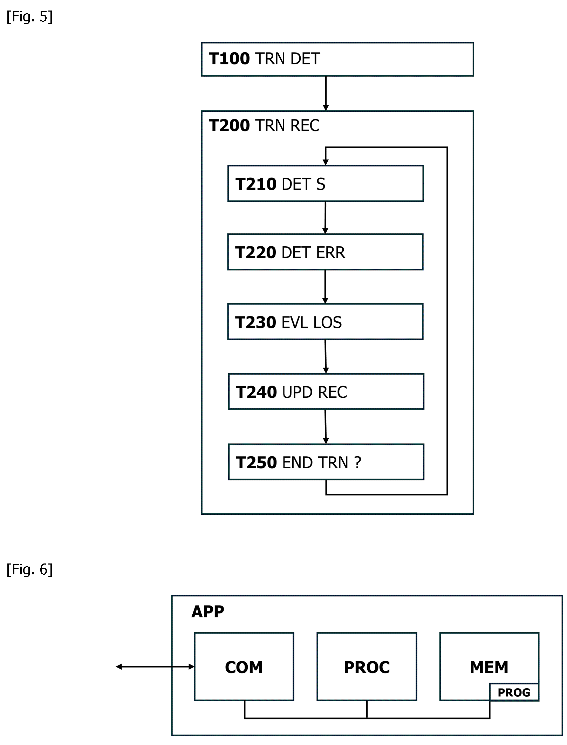

L'entrainement du modèle de détection DET pour détecter fiablement une anomalie est détaillé ci-après (figure 5).

À l'étape S222, le dispositif APP détermine si une anomalie FLT est présente dans l'échantillon d'entrée **X** en fonction du score d'anomalie S.

Selon un mode de réalisation, le dispositif APP détecte une anomalie FLT si le score d'anomalie S est inférieur à un seuil λ (e.g. λ=0.5, ou λ=0.25). Ce seuil peut être prédéterminé, ou obtenu ou calculé de manière dynamique.

Si une anomalie FLT est détectée, le procédé se poursuit à l'étape S230 ; sinon, le procédé réitère les étapes S100 et S200.

À l'étape S230, le dispositif APP caractérise l'anomalie détectée FLT en obtenant un vecteur de caractérisation **V** de l'anomalie détectée. Pour ce faire, il met en œuvre les étapes S231 et S232.

À l'étape S231, le modèle de reconstruction REC détermine un échantillon de données reconstruit **X'** à partir de l'échantillon d'entrée **X.**

Selon un mode de réalisation, le modèle de reconstruction REC comprend un réseau de neurones de type auto-encodeur, entrainé pour reconstruire des données normales. L'entrainement du modèle de reconstruction REC est détaillé ci-après (figure 5).

La solution proposée peut utiliser des auto-encodeurs de différents types d'architecture (e.g., réseaux de neurones convolutifs, transformers) permettant de reconstruire des données normales. Cependant, la présente invention n'est pas limitée à l'utilisation d'un auto-encodeur pour mettre en œuvre le modèle de reconstruction REC. D'autres modèles d'apprentissage automatique permettant de reconstruites des données normales peuvent également être utilisés, par exemple un modèle utilisant une analyse en composantes principales.

À l'étape S232, le module de différence DIF détermine le vecteur de caractérisation **V** sur la base d'une différence entre : l'échantillon d'entrée **X** ; et l'échantillon reconstruit **X'.**

En particulier, selon un mode de réalisation, le vecteur de caractérisation **V** correspond à la différence composante-par-composante entre l'échantillon d'entrée **X** et l'échantillon reconstruit **X'** (i.e. **V**=**X-X'**).

Dans le cadre de l'invention, d'autres modes de réalisation peuvent également être envisagés pour déterminer le vecteur de caractérisation **V.** Il peut par exemple être envisagé d'appliquer une fonction φ à l'échantillon d'entrée **X** et à l'échantillon reconstruit **X'** avant de calculer leur différence (i.e. **V**=φ(**X**)- φ(**X'**)).

Il convient de noter que le vecteur de caractérisation **V** peut également être qualifié de « *vecteur d'erreur de reconstruction* », l'erreur de reconstruction étant définie par la différence entre l'échantillon d'entrée **X** et l'échantillon reconstruit **X'.** Ce terme est notamment connu dans le cadre des réseaux de neurones de type auto-encodeur pour désigner le vecteur d'erreur entre les données d'entrée et les données de sortie de l'auto-encodeur.

À l'étape S240, le dispositif APP fournit le vecteur de caractérisation **V** de l'anomalie détectée FLT. Il peut également fournir le score d'anomalie S.

Le dispositif APP peut par exemple fournir le vecteur de caractérisation **V** à un module de communication pour l'envoi du message d'alerte ALM au serveur d'assistance SRV (selon le mode de réalisation de la figure 2). Il peut également fournir ce vecteur à un autre module de la passerelle GW pour traiter l'anomalie, par exemple pour l'enregistrement dans un journal, pour classifier cette anomalie, voire pour déterminer une intervention à réaliser afin d'y remédier.

Le vecteur de caractérisation **V** est représentatif de l'écart à la normale de l'échantillon d'entrée **X.** Il permet de caractériser précisément l'anomalie détectée FLT.

Plus précisément, le vecteur de caractérisation **V** permet de déterminer quelles composantes de l'échantillon d'entrée **X** divergent de manière significative des composantes de l'échantillon reconstruit **X'** (représentatif du comportement normal attendu). Il permet ainsi de déterminer sur quelles caractéristiques de l'échantillon de données d'entrée **X** porte l'anomalie détectée FLT.

Comme mentionné ci-dessus, la solution proposée repose sur l'utilisation conjointe d'un modèle DET dédié à la détection d'anomalie et d'un modèle REC dédié à la reconstruction de données. Nous présentons ci-dessous l'entrainement de ces modèles pour non seulement détecter une anomalie de manière fiable, mais également pour caractériser l'anomalie de manière précise.

**La** **figure 5** représente un procédé d'entrainement d'un modèle de détection et d'entrainement d'un modèle de reconstruction selon un mode de réalisation de l'invention.

Cette figure présente l'entrainement du modèle de détection DET et du modèle de reconstruction REC du dispositif APP.

Nous présentons ici un mode de réalisation dans lequel l'entraînement des modèles de détection et de reconstruction est réalisé de manière non supervisée. L'ensemble de données d'entraînement utilisé ne comporte pas d'étiquettes identifiant les données comme normales ou anormales. De plus, l'entraînement proposé utilise non seulement des échantillons d'entraînement normaux (i.e. représentatives d'un mode de fonctionnement normal), mais aussi des échantillons d'entraînement anormaux (i.e. représentatives d'un mode de fonctionnement anormal).

Ceci est particulièrement avantageux en ce que les modèles peuvent être entraînés sans pour autant qu'une intervention humaine soit nécessaire pour étiqueter les données d'entraînement, ou qu'il soit nécessaire d'utiliser uniquement des données d'entraînement normales. Dans le contexte de la détection d'une anomalie réseau, ceci permet de collecter des données de trafic réseau et d'entraîner les modèles sur la base de ces données, sans avoir à étiqueter ces données et/ou à filtrer celles-ci pour ne garder que des données normales.

Tel qu'illustré par la figure 5, selon un mode de réalisation, le procédé d'entrainement proposé comprend (tout ou partie) des étapes T100 et T200 décrites ci-après.

À l'étape T100, le modèle de détection DET est entrainé à partir d'un ensemble de données d'entrainement.

Selon ce mode de réalisation, l'entrainement du modèle de détection DET est réalisé de manière non-supervisée en utilisant des échantillons de données d'entrainement normales et anormales. Le modèle de détection est ainsi entraîné par apprentissage automatique à différencier un mode de fonctionnement normal d'un mode de fonctionnement anormal. Un exemple d'un tel entrainement non-supervisé d'un modèle de détection est présenté dans la demande de brevet FR3116979A1.

Notons que l'invention n'est pas limitée à un entrainement particulier du modèle de détection. Dans le cadre de l'invention, d'autres techniques ou procédés d'apprentissage automatique peuvent également être envisagés, qu'ils soient non-supervisés, semi-supervisés, voire supervisés.

À l'étape T200, le modèle de reconstruction REC est entrainé à partir de l'ensemble de données d'entrainement. Pour ce faire, une ou plusieurs itérations (de tout ou partie) des étapes T210 à T250 sont mises en œuvre.

À l'étape T210, un score d'anomalie S est déterminé par le modèle de détection DET pour un échantillon d'entrainement **X** - de manière similaire à l'étape S221 décrite ci-dessus.

À l'étape T220, une erreur de reconstruction ERR est déterminée à partir d'une différence entre l'échantillon d'entrainement **X** et l'échantillon reconstruit **X'** par le modèle de reconstruction REC.

Plus précisément, pour un échantillon d'entrainement **X,** le modèle de reconstruction REC détermine un échantillon reconstruit **X'** - de manière similaire à l'étape S231 décrite ci-dessus. Ensuite, l'erreur de reconstruction ERR est déterminée à partir d'une différence entre : l'échantillon d'entrainement **X** ; et l'échantillon reconstruit **X'.** Par exemple, la norme L2, connue de l'homme du métier, peut être utilisée à cet effet (i.e. ERR=∥**X-X'**∥₂).

Notons que les étapes T210 et T220 peuvent être mises en œuvre l'une après l'autre, ou inversement, ou de manière simultanée.

À l'étape T230, une fonction de coût LOS est évaluée à partir de l'erreur de reconstruction ERR et du score d'anomalie S.

Selon un mode de réalisation, la fonction de coût LOS est évaluée à partir du produit entre l'erreur de reconstruction ERR et le score d'anomalie S (i.e. LOS=ERR×S).

Pour un échantillon d'entrainement **X** normal, dont le score d'anomalie est proche de 1, la fonction de coût LOS prend pleinement en compte l'erreur de reconstruction ERR. En revanche, pour un échantillon d'entrainement **X** anormal, dont le score d'anomalie est proche de 0, la fonction de coût LOS ne prend pas en compte l'erreur de reconstruction ERR.

De cette manière, la fonction de coût LOS prend davantage en compte les erreurs de reconstruction associées aux données considérées comme normales.

Cependant, la présente invention n'est pas limitée à ce mode de réalisation. D'autres modes de réalisation peuvent être envisagés dans lesquels d'autres expressions de la fonction de coût LOS sont utilisées.

À l'étape T240, le modèle de reconstruction REC est mis à jour pour minimiser la fonction de coût LOS.

Dans le cas où le modèle de reconstruction est mis en œuvre par un réseau de neurones, il peut s'agir d'une mise à jour des poids du réseau de neurones (en utilisant la rétropropagation). Mais il peut également s'agir de la mise à jour d'autres paramètres, tels que le nombre de neurones ou le nombre de couches.

Les étapes T210 à T230 peuvent également être mises en œuvre pour une pluralité d'échantillons d'entrainement (i.e. pour un « batch » en anglais) en sommant la fonction de coût LOS ; l'étape T240 est ensuite mise en œuvre pour mettre à jour le modèle de reconstruction REC à l'étape 240 afin de minimiser la fonction de coût LOS.

À l'étape T250, un critère d'arrêt est vérifié pour mettre fin ou non à l'entrainement du modèle de reconstruction REC.

Différents critères d'arrêt peuvent être utilisés. Le nombre d'itérations des étapes précédentes (i.e. un certain nombre d'époques) est un des critères d'arrêt possibles. L'évolution de la fonction de coût LOS au cours des itérations en est un autre. Également, un jeu de données de validation pourrait être utilisé pour déterminer si les performances du modèle de reconstruction REC sont satisfaisantes, ou si l'entraînement doit être poursuivi.

Le procédé d'entrainement proposé permet d'entraîner le modèle de reconstruction REC de manière non supervisée, les échantillons d'entrainement n'étant pas étiquetés. Les scores d'anomalie fournis par le modèle de détection DET sont utilisés pour apprendre le caractère normal ou non des échantillons d'entrainement.

Ceci permet d'entraîner le modèle de reconstruction REC à reconstruire fidèlement des données normales, sans pour autant qu'il soit nécessaire d'annoter les données d'entrainement (aucune intervention humaine n'est nécessaire pour étiqueter les données) ou qu'il soit nécessaire de n'utiliser que des données d'entrainement normales.

Il convient de souligner que les étapes du procédé d'entrainement proposé peuvent être mises en œuvre par un dispositif autre que le dispositif APP.

Par exemple, le procédé d'entraînement peut être mis en œuvre par un serveur distant. Puis, une fois les modèles de détection DET et de reconstruction REC entraînés, ceux-ci peuvent être déployés dans la passerelle GW. Le procédé de détection et de caractérisation d'une anomalie peut alors être mis œuvre localement par le dispositif APP intégré au sein de la passerelle GW.

L'entrainement pourrait également être réparti entre un serveur distant et le dispositif APP. Le serveur distant pourrait mettre en œuvre plusieurs itérations du procédé d'entrainement en utilisant des données de référence (« *offline training* » en anglais) ; puis le dispositif APP pourrait mettre en œuvre d'autres itérations du procédé d'entrainement en utilisant des données collectées par la passerelle GW (« *online training* » en anglais).

Nous avons décrit précédemment l'architecture fonctionnelle du dispositif APP, ainsi que son fonctionnement. Nous présentons maintenant son architecture matérielle.

**La** **figure 6** représente une architecture matérielle d'un dispositif de détection et de caractérisation d'anomalies selon un mode de réalisation de l'invention.

Selon le mode de réalisation illustré par la figure 5, le dispositif APP comprend au moins une unité de traitement ou processeur PROC, et au moins une mémoire MEM. Plus particulièrement, le dispositif APP peut disposer de l'architecture matérielle d'un ordinateur. Il peut comprendre un processeur PROC, une mémoire vive, une mémoire morte MEM, et une mémoire non volatile.

La mémoire MEM constitue un support d'informations conforme à l'invention, lisible par ordinateur et par le processeur PROC, sur lequel est enregistré un programme d'ordinateur PROG conforme à l'invention. Le programme PROG comporte des instructions pour réaliser des étapes d'un procédé conforme à l'invention lorsque le programme d'ordinateur PROG est exécuté par le processeur PROC. Le programme d'ordinateur PROG définit les modules fonctionnels du dispositif APP, qui s'appuient sur ou commandent les éléments matériels de ce dernier. Pour chaque étape (ou opération) d'un procédé conforme à l'invention, le dispositif proposé peut comprendre un module correspondant configuré pour réaliser cette étape.

Tel qu'illustré par la figure 5, selon un mode de réalisation, le dispositif APP dispose d'un module de communication COM configuré pour communiquer avec d'autres éléments d'un système SYS, y compris un équipement utilisateur UE et/ou un serveur d'assistance SRV. Aucune limitation n'est attachée à la nature des interfaces de communication entre ces dispositifs.

**Variantes additionnelles** : Un homme du métier comprend que les variantes et modes de réalisation décrits ci-dessus ne constituent que des exemples non limitatifs de mise en œuvre de l'invention. En particulier, l'homme du métier peut envisager une quelconque adaptation ou combinaison des modes de réalisation et variantes décrits ci-dessus afin de répondre à un besoin bien particulier.

En particulier, la présente invention s'applique non seulement à la détection et la caractérisation d'une panne de fonctionnement ou d'un dysfonctionnement d'un équipement ou d'une intrusion dans un réseau de communication, mais également à d'autres contextes tels que la détection et la caractérisation d'une panne d'un système de mesure (e.g. un capteur météo). L'échantillon de données d'entrée peut donc non seulement correspondre à des données extraites de paquets réseau, mais également à d'autre types de données telles que des données d'un système de mesure.

Il est également à noter que l'ordre dans lequel s'enchaînent les étapes d'un procédé conforme à l'invention, notamment en référence aux dessins ci-joints, ne constitue qu'un exemple de réalisation dépourvu de tout caractère limitatif, des variantes étant possibles. En particulier, un procédé conforme à l'invention peut comprendre une ou plusieurs itérations des étapes décrites ci-dessus, notamment en référence aux dessins ci-joints. Par ailleurs, les signes de référence ne limitent pas l'étendue de la protection, leur unique fonction étant de faciliter la compréhension des revendications.

## Revendications

1. Procédé de caractérisation d'une anomalie (FLT) dans un échantillon de données d'entrée **(X),** comprenant :
- si une anomalie (FLT) est détectée (S220) à partir d'un score d'anomalie (S) déterminé (S221) par un modèle de détection (DET) à partir de l'échantillon d'entrée **(X)** :
∘ une fourniture (S240) d'un vecteur de caractérisation **(V)** de l'anomalie détectée (FLT) déterminé (S232) sur la base d'une différence entre : l'échantillon de données d'entrée **(X)** ; et un échantillon de données reconstruit **(X')** par un modèle de reconstruction (REC) à partir de l'échantillon de données d'entrée **(X)**
le modèle de reconstruction (REC) étant entraîné de sorte que ledit échantillon de données reconstruit (X') correspond à des données normales attendues pour ledit échantillon de données d'entrée (X).

2. Procédé selon la revendication 1, dans lequel l'échantillon de données d'entrée **(X)** comprend des données extraites de paquets réseau (PKT), et l'anomalie détectée (FLT) correspond à une panne de fonctionnement ou un dysfonctionnement d'un équipement réseau ou d'un équipement utilisateur (UE) ou à une intrusion dans un réseau de communication (LAN).

3. Procédé selon la revendication 1 ou 2, comprenant :
- un envoi (S300) d'un message (ALM) comprenant le vecteur de caractérisation **(V)** de l'anomalie détectée (FLT) à destination d'un serveur (SRV), et/ou
- une classification (S400) de l'anomalie détectée (FLT) en fonction du vecteur de caractérisation **(V)** de l'anomalie détectée (FLT), et/ou
- une détermination (S500) d'une action à réaliser (INT) en fonction du vecteur de caractérisation **(V)** de l'anomalie détectée (FLT).

4. Procédé selon l'une quelconque des revendications 1 à 3, dans lequel le modèle de détection (DET) comprend un réseau de neurones de type auto-encodeur, et/ou le modèle de reconstruction (REC) comprend un autre réseau de neurones de type auto-encodeur.

5. Procédé selon l'une quelconque des revendications 1 à 4, dans lequel le vecteur de caractérisation **(V)** de l'anomalie détectée (FLT) est déterminé sur la base d'une différence composante-par-composante entre l'échantillon de données d'entrée **(X)** et l'échantillon de données reconstruit **(X').**

6. Procédé d'entrainement d'un modèle de reconstruction de données (REC), comportant une ou plusieurs itérations comprenant :
- une détermination (T220) d'une erreur de reconstruction (ERR) à partir d'une différence entre un échantillon de données d'entrainement **(X)** et un échantillon de données reconstruit **(X')** par le modèle de reconstruction (REC),
- une évaluation (T230) d'une fonction de coût (LOS) à partir de l'erreur de reconstruction (ERR) et d'un score d'anomalie (S) déterminé (T210) par un modèle de détection d'anomalies (DET) à partir de l'échantillon de données d'entrainement **(X),** et
- une mise à jour (T240) du modèle de reconstruction (REC) pour minimiser la fonction de coût (LOS),
le modèle de reconstruction (REC) étant entraîné de sorte que ledit échantillon de données reconstruit (X') correspond à des données normales attendues pour ledit échantillon de données d'entrée (X).

7. Procédé selon la revendication 6, dans lequel l'échantillon de données d'entrainement **(X)** appartient à un ensemble de données d'entrainement comprenant des échantillons de données normaux et anormaux et ne comprenant pas d'étiquettes identifiant une ou plusieurs anomalies dans l'ensemble de données d'entraînement.

8. Procédé selon la revendication 6 ou 7, dans lequel la fonction de coût (LOS) est évaluée (T230) à partir d'un produit entre l'erreur de reconstruction (ERR) et le score d'anomalie (S).

9. Procédé selon l'une quelconque des revendications 6 à 8, comprenant, préalablement à l'entrainement (T200) du modèle de reconstruction (REC), un entrainement (T100) du modèle de détection (DET) à partir d'échantillons de données d'entrainement.

10. Dispositif (APP) de caractérisation d'une anomalie (FLT) dans un échantillon de données d'entrée **(X),** le dispositif comprenant :
- un module de détection configuré pour détecter (S220) une anomalie (FLT) à partir d'un score d'anomalie (S) déterminé (S221) par un modèle de détection (DET) à partir de l'échantillon d'entrée **(X),** et
- un module de caractérisation configuré pour, si une anomalie (FLT) est détectée, fournir (S240) un vecteur de caractérisation **(V)** de l'anomalie détectée (FLT) déterminé (S232) sur la base d'une différence entre : l'échantillon de données d'entrée **(X)** ; et un échantillon de données reconstruit **(X')** par un modèle de reconstruction (REC) à partir de l'échantillon de données d'entrée **(X),**
le modèle de reconstruction (REC) étant entraîné de sorte que ledit échantillon de données reconstruit (X') correspond à des données normales attendues pour ledit échantillon de données d'entrée (X).

11. Dispositif d'entrainement d'un modèle de reconstruction de données (REC) comprenant :
- un module de détermination configuré pour déterminer (T220) une erreur de reconstruction (ERR) à partir d'une différence entre un échantillon de données d'entrainement **(X)** et un échantillon de données reconstruit **(X')** par le modèle de reconstruction (REC),
- un module d'évaluation configuré pour évaluer (T230) une fonction de coût (LOS) à partir de l'erreur de reconstruction (ERR) et d'un score d'anomalie (S) déterminé (T210) par un modèle de détection d'anomalies (DET) à partir de l'échantillon de données d'entrainement **(X),** et
- un module de mise à jour configuré pour mettre à jour (T240) le modèle de reconstruction (REC) pour minimiser la fonction de coût (LOS), le modèle de reconstruction (REC) étant entraîné de sorte que ledit échantillon de données reconstruit (X') correspond à des données normales attendues pour ledit échantillon de données d'entrée (X).

12. Système comprenant un dispositif d'entrainement selon la revendication 11 et un dispositif (APP) de caractérisation d'une anomalie (FLT) selon la revendication 10.

13. Programme d'ordinateur (PROG) comprenant des instructions pour mettre en œuvre les étapes d'un procédé selon l'une quelconque des revendications 1 à 9, lorsque ledit programme d'ordinateur (PROG) est exécuté par au moins un processeur (PROC).

14. Support d'informations (MEM) lisible par ordinateur comprenant un programme d'ordinateur (PROG) selon la revendication 13.
